# FASCICULE DE BREVET EUROPEEN

(11) **EP 3 276 656 B1**
(45) Date de publication et mention de la délivrance du brevet: **13.02.2019**
(21) Numéro de dépôt: 17182933.6
(22) Date de dépôt: 25.07.2017
(51) Int. Cl.: H01L 23/00, G06F 21/87, G06K 19/073, H01L 23/552

(54) **CIRCUIT INTEGRE PROTEGE**
GESCHÜTZTE INTEGRIERTE SCHALTUNG
PROTECTED INTEGRATED CIRCUIT

(30) Priorité: 25.07.2016 FR 1657129
(43) Date de publication de la demande: 31.01.2018
(73) Titulaire: Tiempo, 38330 Montbonnot St-Martin (FR)
(72) Inventeur: Renaudin, Marc, 38330 Biviers (FR); Folco, Bertrand, 38100 Grenoble (FR); Boulahia, Boubkar, 38000 Grenoble (FR)
(74) Mandataire: Talbot, Alexandre

(56) Documents cités:
- US-A1- 2003 132 777
- US-A1- 2003 218 475
- US-B1- 6 496 119

## Description

### Domaine technique de l'invention

L'invention est relative à un circuit intégré muni d'un dispositif de protection.

L'invention est également relative à un procédé de protection d'un circuit intégré.

### État de la technique

Quotidiennement, un utilisateur échange de très nombreuses informations sous forme électronique avec des tiers. Afin de s'assurer que ces informations restent confidentielles, elles sont chiffrées au moyen de différents algorithmes de cryptage. De nombreuses études sont réalisées sur les algorithmes de cryptage afin de les rendre de plus en plus puissants. Néanmoins, ces algorithmes sont mis en oeuvre dans des dispositifs électroniques qui peuvent être la cible d'attaques. Il peut apparaître plus intéressant de rechercher le fonctionnement du dispositif électronique afin d'en déduire le fonctionnement de l'algorithme de cryptage.

Plusieurs manières d'attaquer des circuits intégrés sont rapportées dans la littérature pour en déduire les algorithmes de cryptage mis en oeuvre dans ces circuits intégrés. Il est possible par exemple de citer l'analyse des temps de calcul, l'analyse de la corrélation entre les données traitées et la consommation électrique du circuit, l'analyse des émanations électromagnétiques ou encore l'analyse des photons émis.

Il existe également des attaques invasives qui ont pour but de détruire partiellement ou en totalité la fonctionnalité initiale du circuit intégré en observant les signaux qui transitent à l'intérieur du circuit intégré. De cette manière, en émettant des informations témoins et en comparant les résultats avant et après modification du circuit, les attaquants peuvent deviner certaines fonctionnalités du circuit intégré.
Une attaque invasive est réalisée le plus souvent sur un composant décapsulé ou sur un composant puce-nue. La modification du circuit intégré peut être réalisée à l'aide d'un faisceau d'ions focalisé (FIB), nécessitant une dépassivation et des cassures locales de pistes métalliques.
Il est également possible de placer des microsondes sur des pistes électriques du circuit intégré afin d'observer les différents signaux qui se déplacent entre les blocs fonctionnels et ainsi découvrir les fonctions réalisées par chacun des blocs fonctionnels. L'attaquant peut ainsi examiner les échanges qui ont lieu sur le bus de communication entre le processeur et la mémoire ou entre le processeur et un bloc de cryptographie.
Certains circuits sont munis de protections (tels que des capteurs de tension d'alimentation, de lumière, de fréquence d'horloge...) contre les attaques. Cependant, l'attaquant peut être amené à les désactiver en coupant les fils de métal d'interconnexion, par exemple, avec un scalpel laser ou un FIB.
Afin d'éviter que des attaques invasives soient réalisées, il existe encore des boucliers électriques qui recouvrent un ou plusieurs blocs fonctionnels du circuit intégré. Des signaux électriques sont envoyés à l'intérieur du bouclier électrique depuis un émetteur jusqu'à un récepteur. Si les signaux électriques n'arrivent pas jusqu'au récepteur, ce dernier en déduit que le bouclier est soumis à une attaque invasive et il peut en informer le bloc fonctionnel ou un autre élément du circuit intégré.

Les documents US 2003/132777, US 2003/218475 et US 6 496 119 B1 divulguent des mécanismes de protection pour détecter des attaques électromagnétiques contre des circuits intégrés.

Cependant, il apparaît que cette solution n'est pas complètement satisfaisante car elle est très consommatrice d'énergie et/ou d'une efficacité limitée.

### Objet de l'invention

L'invention a comme objet de fournir un circuit intégré qui comporte un dispositif de protection qui est facile à mettre en oeuvre et plus efficace.

Le circuit intégré est remarquable en ce qu'il comporte :
- un bloc fonctionnel configuré pour réaliser une pluralité de fonctions logiques et/ou analogiques,
- un dispositif de protection comportant :
   ∘ un circuit de commande configuré pour émettre au moins un premier signal et recevoir un deuxième signal,
   ∘ un récepteur configuré pour recevoir le premier signal et émettre le deuxième signal en réception du premier signal,
   ∘ une première série de lignes électriquement conductrices reliant le circuit de commande et le récepteur pour assurer le transit du premier signal,
   ∘ une deuxième série de lignes électriquement conductrices reliant le récepteur et le circuit de commande pour assurer le transit du deuxième signal,
   ∘ une pluralité de stations de contrôle connectées simultanément à la première et à la deuxième séries de lignes électriquement conductrices pour définir un premier schéma électrique élémentaire dans la première série de lignes électriquement conductrices et un deuxième schéma électrique élémentaire distinct et équivalent au premier schéma électrique élémentaire dans la deuxième série de lignes électriquement conductrices,
   ∘ un bouclier disposé pour recouvrir au moins partiellement le bloc fonctionnel, le bouclier comportant une partie de l'ensemble formé par la première et la deuxième séries de lignes électriquement conductrices.

Le circuit de commande est remarquable car il est configuré pour détecter une modification du premier schéma électrique élémentaire par rapport au deuxième schéma électrique élémentaire par défaut de réception du deuxième signal après une durée prédéterminée.

Dans un développement, chaque station de contrôle est configurée pour mesurer la différence d'occurrence entre le premier signal et le deuxième signal et bloquer la propagation d'au moins un des premier et deuxième signaux en fonction de ladite mesure.

De manière avantageuse, chaque station de contrôle est configurée pour présenter un premier état autorisant le passage du premier signal et un deuxième état bloquant le passage du premier signal, chaque station de contrôle est configurée pour basculer du premier état au deuxième état à réception du premier signal et basculer du deuxième état au premier état à réception du deuxième signal.

Il est également intéressant de prévoir que chaque station de contrôle est configurée pour présenter un deuxième état autorisant le passage du deuxième signal et un premier état bloquant le passage du deuxième signal.

Dans un mode de réalisation particulier, chaque station de contrôle est formée par un séquenceur ayant une première entrée et une première sortie connectées à deux lignes électriquement conductrices de la première série de lignes électriquement conductrices et une deuxième entrée et une deuxième sortie connectées à deux lignes électriquement conductrices de la deuxième série de lignes électriquement conductrices.

De manière avantageuse, le séquenceur est un séquenceur asynchrone.

Dans un mode de réalisation particulier, la première et la deuxième séries de lignes électriquement conductrices sont disposées au-dessus du bloc fonctionnel. La deuxième série de lignes électriquement conductrices est disposée entre la première série de lignes électriquement conductrices formant le bouclier et le bloc fonctionnel.

En alternative, la première et la deuxième séries de lignes électriquement conductrices sont disposées au-dessus du bloc fonctionnel. La première série de lignes électriquement conductrices est disposée entre la deuxième série de lignes électriquement conductrices formant le bouclier et le bloc fonctionnel.

Dans une autre alternative, la première et la deuxième séries de lignes électriquement conductrices sont disposées au-dessus du bloc fonctionnel. Une première partie de la première série et une première partie de la deuxième série de lignes électriquement conductrices forment le bouclier. Une deuxième partie de la première série et une deuxième partie de la deuxième série de lignes électriquement conductrices sont disposées entre le bouclier et le bloc fonctionnel.

Dans un mode de réalisation particulier, la première série de lignes électriquement conductrices comporte un circuit de divergence configuré pour dupliquer le premier signal reçu et alimenter au moins des première et deuxième lignes montées en dérivation, la première et la deuxième lignes montées en dérivation comportant respectivement un premier et un deuxième séquenceurs.

Il est également intéressant de prévoir que le circuit de commande est configuré pour demander un changement du fonctionnement du bloc fonctionnel en réponse à la détection de la modification du premier schéma électrique élémentaire par rapport au deuxième schéma électrique élémentaire.

L'invention a également pour objet un procédé de protection d'un circuit intégré qui est plus facile à mettre en oeuvre.

Le procédé est remarquable en ce qu'il comporte les étapes successives suivantes :
- fournir un circuit intégré comportant :
   ∘ un bloc fonctionnel configuré pour réaliser une pluralité de fonctions logiques et/ou analogiques,
   ∘ un premier schéma électrique élémentaire défini par une première série de lignes électriquement conductrices,
   ∘ un deuxième schéma électrique élémentaire distinct et équivalent au premier schéma électrique élémentaire, le deuxième schéma électrique élémentaire étant défini par une deuxième série de lignes électriquement conductrices,
   ∘ une pluralité de stations de contrôle connectées simultanément à la première et à la deuxième séries de lignes électriquement conductrices,
   ∘ un bouclier disposé pour recouvrir au moins partiellement le bloc fonctionnel, le bouclier comportant une partie de l'ensemble formé par la première et la deuxième séries de lignes électriquement conductrices,
- émettre un premier signal sur la première série de lignes électriquement conductrices à partir du circuit de commande en direction d'un récepteur,
- contrôler si après une première durée prédéterminée, un deuxième signal est reçu par le circuit de commande à partir de la deuxième série de lignes électriquement conductrices.

Dans un développement, le circuit de commande déclenche une stratégie de réponse modifiant le fonctionnement du bloc fonctionnel si après la première durée prédéterminée, le circuit de commande n'a pas reçu le deuxième signal Le circuit de commande est configuré pour détecter une modification du premier schéma électrique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, de manière schématique, en coupe, un circuit intégré muni de son dispositif de protection,
- la figure 3, illustre une représentation schématique fonctionnelle d'un dispositif de protection,
- les figures 4 à 8 représentent des étapes de fonctionnement d'une station de contrôle asynchrone,
- les figures 9, 10, 11 et 12 représentent de manière schématique d'autres modes de réalisation du circuit de protection.

### Description détaillée

Afin de découvrir le fonctionnement spécifique d'un circuit intégré et/ou plus particulièrement d'un bloc fonctionnel 1, des assaillants étudient les signaux qui circulent entre les différents éléments du circuit électronique et/ou du bloc fonctionnel 1.

Les attaques invasives nécessitent d'accéder physiquement aux éléments constitutifs des circuits intégrés et notamment les pistes électriques, les plots d'entrées/sorties, les bus d'interconnexion. L'assaillant réalise la mise à nu du circuit intégré de manière à accéder par exemple aux pistes électriques.

Afin de protéger le circuit intégré ou une partie du circuit intégré contre une attaque invasive, ce dernier dispose d'un dispositif de protection 2. Le dispositif de protection 2 est relié au bloc fonctionnel 1. La connexion entre le dispositif de protection 2 et le bloc fonctionnel 1 peut être directe ou indirecte.

Le dispositif de protection 2 est configuré pour détecter une attaque invasive et pour engager une stratégie de réponse lorsque le dispositif de protection 2 détecte une modification du premier schéma électrique.

La stratégie de réponse comporte une modification du fonctionnement du bloc fonctionnel 1 en réponse à la détection de cette attaque. La modification du comportement du bloc fonctionnel 1 peut être l'arrêt du bloc fonctionnel 1, la réalisation d'une autre fonction que celle réalisée initialement, l'introduction de signaux parasites faussant le fonctionnement du bloc fonctionnel.

Un bloc fonctionnel 1 est configuré pour réaliser une pluralité de fonctions logiques et/ou analogiques. Le bloc fonctionnel comporte une pluralité d'éléments actifs et/ou passifs tels que des transistors, des résistances, des condensateurs, des impédances qui sont connectés entre eux pour réaliser une fonction précise.

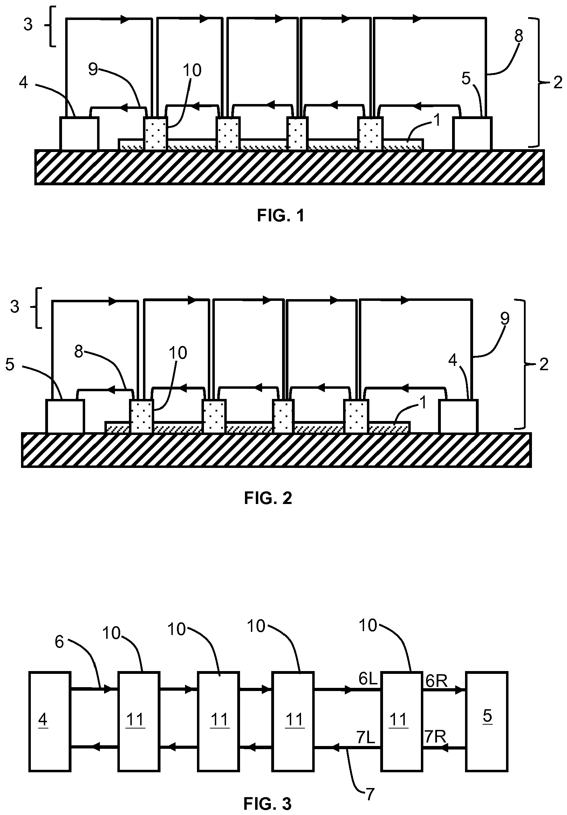

Comme illustré aux figures 1 et 2, le dispositif de protection 2 comporte un bouclier 3 en matériau électriquement conducteur qui est disposé au-dessus des éléments constitutifs du circuit intégré. Le bouclier 3 peut recouvrir l'intégralité du circuit intégré ou seulement une partie du circuit intégré et notamment le bloc fonctionnel 1.

Le dispositif de protection 2 comporte au moins une pluralité de lignes électriquement conductrices. Les lignes électriquement conductrices sont espacées les unes des autres et définissent un premier schéma électrique. Le dispositif de protection 2 va émettre au moins un signal électrique de contrôle qui va se déplacer selon le premier schéma électrique.

Pour protéger le bloc fonctionnel 1, une partie des lignes électriquement conductrices est utilisée pour former un bouclier 3 qui recouvre le bloc fonctionnel 1. Si un attaquant modifie le schéma électrique à l'intérieur du bouclier 3, le dispositif de protection 2 est en mesure de détecter cette modification et de demander un changement du fonctionnement du bloc fonctionnel 1 du circuit intégré. En alternative, le dispositif de protection 2 peut comporter plusieurs boucliers 3 configurés pour protéger un ou plusieurs blocs fonctionnels 1 du circuit intégré.

Dans un mode de réalisation, le bouclier 3 peut être placé intégralement au-dessus des pistes électriques qui servent à l'échange des informations électriques entre les composants du bloc fonctionnel 1 et/ou entre les différents blocs fonctionnels 1. Dans une alternative de réalisation, le bouclier 3 est placé dans un niveau électrique qui comporte des pistes électriques formant le bouclier 3 et des pistes électriques qui participent à l'échange des informations électriques entre les composants d'un bloc fonctionnel 1 et/ou entre les différents blocs fonctionnels 1.

Le circuit intégré comporte au moins un bloc fonctionnel 1 qui est avantageusement formé par une pluralité de transistors. Le bloc fonctionnel 1 est configuré pour réaliser une pluralité de fonctions logiques et/ou analogiques. Les transistors sont réalisés de préférence dans un substrat semi-conducteur. Les transistors sont reliés entre eux par des lignes électriquement conductrices qui sont perpendiculaires à la surface du substrat et des lignes électriquement conductrices qui sont parallèles à la surface du substrat. Les lignes parallèles définissent des niveaux électriques. Les transistors sont reliés entre eux par des lignes électriques suivant un schéma spécifique qui définit une ou plusieurs fonctions précises.

Il est particulièrement avantageux de former au moins une partie du bouclier 3 dans le dernier niveau électrique ou dans les deux derniers niveaux électriques du circuit intégré, c'est-à-dire dans le niveau ou les deux niveaux électriques les plus éloignés du substrat semi-conducteur.

Si le bouclier 3 électrique recouvre tout le circuit intégré, c'est-à-dire tous les blocs fonctionnels 1, il est plus difficile pour un assaillant d'atteindre la structure des éléments constitutifs du circuit pour observer des signaux et/ou en déduire la fonction de chacun de ces blocs.

En alternative, si le bouclier 3 électrique est formé dans le même niveau électrique que les pistes électriques intervenant dans le transfert des signaux entre les différents blocs fonctionnels 1, il est possible de compliquer l'observation et/ou la reconnaissance des différents blocs fonctionnels 1.

Le dispositif de protection 2 comporte un circuit de commande 4 et un récepteur 5 configurés pour échanger des premier et deuxième signaux 6 et 7 à travers le premier schéma électrique. Le circuit de commande 4 est distinct du récepteur 5.

Comme illustré à la figure 3, le circuit de commande 4 est configuré pour émettre au moins un premier signal 6 en direction du récepteur 5 et recevoir un deuxième signal 7 en provenance du récepteur 5. Le premier signal 6 se déplace depuis le circuit de commande 4 jusqu'à un récepteur 5. A réception du premier signal 6, le récepteur 5 émet un deuxième signal 7. Le deuxième signal 7 se déplace depuis le récepteur 5 jusqu'au circuit de commande 4. De manière avantageuse, le premier signal 6 a une forme différente du deuxième signal 7.

De cette manière, si le premier schéma électrique est modifié et introduit une coupure ou un court-circuit dans le premier schéma électrique, le premier signal 6 et/ou le deuxième signal 7 ne peuvent plus transiter. Le dispositif de protection 2 détecte l'attaque invasive et prévient avantageusement le bloc fonctionnel 1. De manière avantageuse, le circuit de commande 4 est configuré pour vérifier si le deuxième signal a été reçu avant un délai prédéterminé qui commence lorsque le premier signal est émis. De cette manière, si aucun deuxième signal n'est reçu après le délai, le circuit de commande 4 peut considérer qu'une attaque est réalisée avec modification du premier schéma électrique élémentaire par rapport au deuxième schéma électrique élémentaire.

Pour renforcer la sécurité et réduire les risques de contournement par court-circuit, le premier schéma électrique est dissocié en au moins une première série 8 de lignes électriquement conductrices et une deuxième série 9 de lignes électriquement conductrices distincte de la première série 8.

Des stations de contrôle 10 sont placées le long de la première série 8 et de la deuxième série 9 afin de suivre le cheminement des signaux et s'assurer que le premier schéma électrique n'est pas modifié. Les stations de contrôle 10 sont connectées simultanément à la première série 8 et à la deuxième série 9.

La pluralité de stations de contrôle 10 définit un premier schéma électrique élémentaire dans la première série 8 de lignes électriquement conductrices et un deuxième schéma électrique élémentaire dans la deuxième série 9 de lignes électriquement conductrices. Le deuxième schéma électrique élémentaire est équivalent au premier schéma électrique élémentaire.

De manière particulièrement avantageuse, les stations de contrôle 10 sont connectées à la première série 8 et à la deuxième série 9 de lignes électriquement conductrices de manière à former des schémas électriques équivalents et de préférence le même schéma électrique dans la première série 8 et dans la deuxième série 9 de lignes électriquement conductrices. Des schémas électriques équivalent sont des schémas électriques où les stations de contrôle 10 sont rencontrées dans deux ordres strictement opposés. Ainsi, la première station de contrôle 10 visitée par le premier signal 6 est la dernière station de contrôle 10 visitée par le deuxième signal 7. De la même manière, la dernière station de contrôle 10 visitée par le premier signal 6 est la première station de contrôle 10 visitée par le deuxième signal 7.

Le circuit de commande 4 est configuré pour détecter une modification du premier schéma électrique élémentaire par rapport au deuxième schéma électrique élémentaire.

Le circuit de commande 4 est connecté au récepteur 5 par la première série 8 de lignes électriquement conductrices. Les lignes électriquement conductrices sont connectées en série et/ou en parallèle entre le circuit de commande 4 et le récepteur 5. Cette première série 8 de lignes électriquement conductrices est utilisée pour le transit du premier signal 6.

Le circuit de commande 4 est également connecté au récepteur 5 par une deuxième série 9 de lignes électriquement conductrices connectées en série et/ou parallèle entre le circuit de commande 4 et le récepteur 5. Cette deuxième série 9 de lignes électriquement conductrices est utilisée pour le transit du deuxième signal 7.

Dans un mode de réalisation avantageux, la première et la deuxième séries de lignes électriquement conductrices sont disposées au-dessus du bloc fonctionnel 1. De cette manière, la première et/ou la deuxième séries de lignes électriquement conductrices empêchent un assaillant d'avoir accès à la circulation des informations électriques dans le bloc fonctionnel 1.

Dans un premier mode de réalisation, le bouclier 3 est formé exclusivement par la première série 8 de lignes électriquement conductrices (figure 1). Dans ce cas de figure, le premier signal 6 se déplace depuis le circuit de commande 4 vers le récepteur 5 à travers le bouclier 3. De manière avantageuse, la deuxième série 9 de lignes électriquement conductrices est disposée de manière à séparer le substrat semi-conducteur et la première série 8 de lignes électriquement conductrices. Le bloc fonctionnel 1 et la deuxième série 9 sont protégés par le bouclier 3 et il est plus difficile de court-circuiter la deuxième série 9.

Dans un deuxième mode de réalisation, le bouclier 3 est formé exclusivement par la deuxième série 9 de lignes électriquement conductrices. Dans ce cas de figure (figure 2), le deuxième signal 7 se déplace depuis le récepteur 5 vers le circuit de commande 4 à travers le bouclier 3. De manière avantageuse, la première série 8 de lignes électriquement conductrices est disposée de manière à séparer le substrat semi-conducteur et la deuxième série 9 de lignes électriquement conductrices. Le bloc fonctionnel 1 et la première série 8 sont protégés par le bouclier 3 et il est plus difficile de court-circuiter la première série 8.

Dans certaines configurations, le mode de réalisation de la figure 1 est plus avantageux que celui de la figure 2 car il est plus robuste vis-à-vis d'une attaque par un court-circuit.

Ces deux modes de réalisation sont particulièrement avantageux car une seule série de lignes électriquement conductrices est utilisée pour former le bouclier 3 et l'assaillant n'a pas accès à l'autre série de lignes électriquement conductrices. Il est alors beaucoup plus compliqué de comprendre le fonctionnement du dispositif de protection 2.

En alternative, le bouclier 3 peut comprendre une partie seulement de la première série 8 de lignes électriquement conductrices et/ou une partie seulement de la deuxième série 9 de lignes électriquement conductrices. Une première partie de la première série 8 de lignes électriquement conductrices et une première partie de la deuxième série 9 de lignes électriquement conductrices forment le bouclier 3. Une deuxième partie de la première série 8 de lignes électriquement conductrices et une deuxième partie de la deuxième série 9 de lignes électriquement conductrices sont disposées entre le bouclier 3 et la pluralité de transistors du bloc fonctionnel 1.

La première partie de la première série 8 de lignes électriquement conductrices et la deuxième partie de la deuxième série 9 de lignes électriquement conductrices sont associées par les stations de contrôle 10. La deuxième partie de la première série 8 de lignes électriquement conductrices et la première partie de la deuxième série 9 de lignes électriquement conductrices sont associées par les stations de contrôle 10.

Afin d'éviter qu'un assaillant ne modifie la forme du bouclier 3 sans modifier le premier schéma électrique, il est particulièrement avantageux de placer une pluralité de stations de contrôle 10 le long du premier schéma électrique.

Ainsi, durant son transit entre le circuit de commande 4 et le récepteur 5, le premier signal 6 va traverser la pluralité de stations de contrôle 10. De la même manière, le deuxième signal 7 va traverser la pluralité de stations de contrôle 10 depuis le récepteur 5 vers le circuit de commande 4. De cette manière, si un court-circuit est réalisé dans le bouclier 3 et que ce court-circuit exclut une station de contrôle 10 pour l'un des signaux et non pour l'autre, le dispositif de protection 2 est en mesure de détecter l'attaque et avantageusement de prévenir le bloc fonctionnel 1.

De manière encore plus avantageuse, la station de contrôle 10 est formée à l'intérieur de la surface occupée par le bloc fonctionnel 1 et protégée par le bouclier 3 pour la rendre moins vulnérable.

Cependant, afin de limiter les possibilités de modifications sur le schéma électrique, il est avantageux d'utiliser une quantité importante de stations de contrôle 10 ce qui peut entrainer une augmentation importante de la puissance électrique consommée par le dispositif de protection.

Par exemple, pour détecter qu'une station de contrôle 10 a été court-circuitée, elle peut comparer la fréquence des occurrences des signaux de contrôle par rapport à une fréquence de référence. Un tel mode de réalisation est compliqué à mettre en oeuvre et consommateur d'énergie. Il en est de même en observant les distorsions du signal de contrôle par rapport à une forme de référence. Il est donc avantageux de trouver une autre manière de procéder.

Dans un mode de réalisation avantageux, la station de contrôle 10 compare les occurrences du premier signal 6 avec les occurrences du deuxième signal 7 afin de détecter une modification du schéma électrique. Si la station de contrôle 10 détecte que la différence entre le nombre d'occurrence du premier signal 6 et le nombre d'occurrence du deuxième signal 7 est strictement supérieure à 1, elle peut engager une action qui prévient le circuit de commande. Cette action peut être un blocage du signal qui arrive sur son entrée.

Il est particulièrement avantageux de prévoir des stations de contrôle 10 configurées pour présenter au moins un premier état et un deuxième état différent du premier état.

Dans un mode de réalisation, le premier état est un état passant pour le premier signal 6. Le premier signal 6 peut donc traverser la station de contrôle 10 pour atteindre la station de contrôle 10 suivante ou le récepteur 5. Le deuxième état est un état bloquant qui empêche le passage du premier signal 6.

Dans un autre mode de réalisation, le deuxième état est un état passant pour le deuxième signal 7. Le deuxième signal 7 peut donc traverser la station de contrôle 10 pour atteindre la station de contrôle 10 suivante ou le circuit de commande. Le premier état est un état bloquant qui empêche le passage du deuxième signal 7.

Ces deux modes de réalisation peuvent être combinés.

De manière préférentielle, lorsque le premier signal 6 atteint une première entrée d'une station de contrôle 10, cette dernière passe d'un premier état à un deuxième état et elle autorise le passage du premier signal 6. Si la station de contrôle 10 est déjà dans le deuxième état, elle reste dans le deuxième état et elle bloque le premier signal 6 qui ne traverse pas la station de contrôle 10.

Lorsque le deuxième signal 7 atteint une deuxième entrée d'une station de contrôle 10, cette dernière passe du deuxième état au premier état. Si la station de contrôle 10 est déjà dans le premier état, elle reste dans le premier état et elle bloque le deuxième signal 7 qui ne traverse pas la station de contrôle 10.

Au fur et à mesure que le premier signal 6 passe au travers des différentes stations de contrôle 10, ces dernières basculent du premier état au deuxième état et le premier signal 6 peut transiter depuis le circuit de commande 4 jusqu'au récepteur 5.

Si l'une des stations est dans le deuxième état, le premier signal 6 ne peut pas passer la station de contrôle 10 et le premier signal 6 ne peut atteindre le récepteur 5. Par exemple, si une station de contrôle 10 a été court-circuitée et que le deuxième signal 7 ne lui est pas parvenu, elle reste dans le deuxième état.

Au fur et à mesure que le deuxième signal 7 passe au travers des différentes stations de contrôle, ces dernières changent d'état. La station de contrôle 10 bascule d'un deuxième état à un premier état et le signal peut transiter depuis le récepteur 5 jusqu'au circuit de commande 4. Si l'une des stations est déjà dans le premier état, le deuxième signal 7 ne peut pas passer la station de contrôle 10. Par exemple, si une station de contrôle 10 a été court-circuitée et que le premier signal 6 ne lui est pas parvenu, elle reste dans le premier état.

De cette manière, si une des stations de contrôle 10 est court-circuitée, le deuxième signal 7 ne peut atteindre le circuit de commande 4 et le dispositif de protection 2 peut avertir le bloc fonctionnel 1.

Le basculement du premier état au deuxième état est associé à l'émission d'un premier signal 6 sur la première borne de sortie de la station de contrôle. Le basculement du deuxième état au premier état est associé à l'émission d'un deuxième signal 7 sur la deuxième borne de sortie de la station de contrôle.

La pluralité de stations de contrôle 10 est configurée pour basculer entre le premier état et le deuxième état en réponse à la réception du premier signal 6 ou du deuxième signal 7. De cette manière, l'alternance des premier et deuxième signaux permet de s'assurer que le premier schéma électrique n'a pas été modifié.

De cette manière, si le schéma électrique du bouclier 3 est modifié pour court-circuiter une station de contrôle 10, cette dernière va bloquer le passage d'un premier signal 6 ou d'un deuxième signal 7.

Dans un mode de réalisation, la station de contrôle 10 comporte ou est formée par un séquenceur. De manière préférentielle, le séquenceur est un séquenceur asynchrone.

Pour réaliser cette fonctionnalité, il est particulièrement avantageux d'utiliser des stations de contrôle 10 qui sont des circuits asynchrones. L'utilisation de circuits asynchrones permet de réduire la consommation d'énergie et diminuer la latence en comparaison d'un dispositif synchrone. Le dispositif de protection 2 peut comporter un dispositif asynchrone contenant le circuit de commande 4, les stations de contrôle 10 et le récepteur 5. De manière préférentielle, il est possible d'utiliser exclusivement des premier et deuxième signaux pour le fonctionnement du dispositif de protection 2 dans le premier schéma électrique. Dans un mode de réalisation encore plus particulier, il est possible d'utiliser les transitions des premier et deuxième signaux. Il est également possible de se passer d'un signal d'horloge.

Dans un fonctionnement asynchrone, le premier signal 6 peut être considéré comme un signal de requête et le deuxième signal 7 peut être considéré comme un signal d'acquittement.

Dans la description qui suit, la requête et l'acquittement désignent des signaux de contrôle locaux qui permettent la synchronisation entre les composants du dispositif asynchrone, ici entre les stations de contrôle 10. Deux stations de contrôle 10 successives sont reliées par un canal de communication entre les deux composants. Le canal de communication peut être formé par un ou plusieurs fils véhiculant le premier signal 6 et par un ou plusieurs fils véhiculant le deuxième signal 7.

Les première et deuxième séries de lignes électriquement conductrices forment les fils dans le canal de communication.

La première série 8 de lignes électriquement conductrices transmet la requête depuis le circuit de commande 4 jusqu'au récepteur 5 en passant par les stations de contrôle 10. La deuxième série 9 de lignes électriquement conductrices transmet le signal d'acquittement depuis le récepteur 5 jusqu'au circuit de commande 4 en passant par les stations de contrôle 10.

De manière avantageuse, le circuit de commande 4 est configuré pour contrôler si après une première durée prédéterminée, un signal d'acquittement est reçu par le circuit de commande 4.

De manière avantageuse, au moins une des stations de contrôle 10 est formée par un séquenceur 11. Ce mode de réalisation est avantageux car il est compact et simple à mettre en oeuvre. Le séquenceur 11 possède une première entrée et une première sortie connectées à deux lignes électriquement conductrices de la première série 8 de lignes électriquement conductrices. De cette manière, le premier signal 6 peut circuler dans la première série 8 de lignes électriquement conductrices. Le séquenceur 11 possède une deuxième entrée et une deuxième sortie connectées à deux lignes électriquement conductrices de la deuxième série 9 de lignes électriquement conductrices. De cette manière, le deuxième signal 7 peut circuler dans la deuxième série 9 de lignes électriquement conductrices.

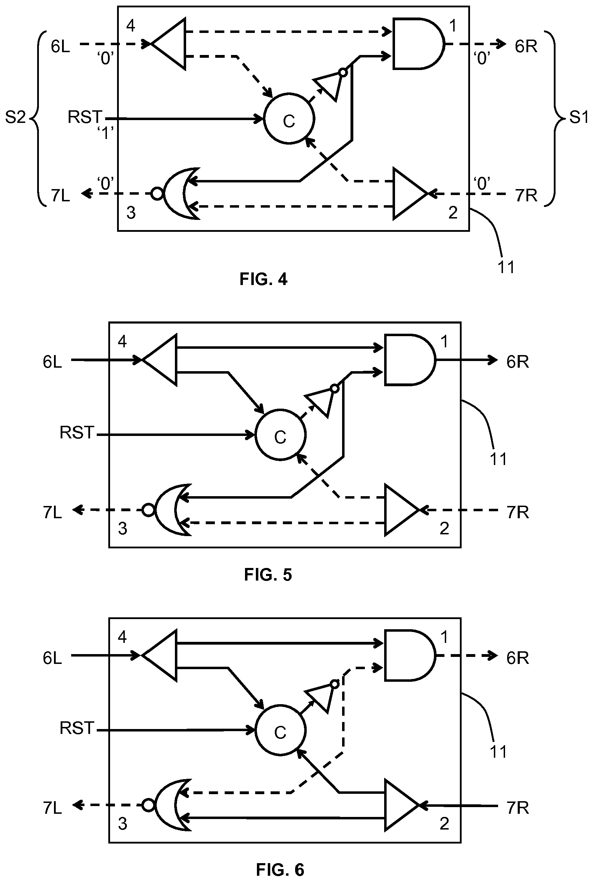

La figure 4 représente en détail un séquenceur 11 à deux canaux de commande.

Le séquenceur 11 comprend quatre entrées-sorties principales, référencées de 1 à 4, à droite, la sortie 1 et l'entrée 2 sont associées respectivement à un signal de requête 6R et un signal d'acquittement 7R. Ces deux signaux correspondent au canal S1 de la figure 3 qui relie deux ou au moins deux stations de contrôle 10 successives ou au canal qui relie la dernière station de contrôle 10 avec le récepteur 5.

La sortie 3 et l'entrée 4, à gauche, sont associées respectivement aux signaux d'acquittement 7L et de requête 6L et correspondent au canal S2 qui relie deux ou au moins deux stations de contrôle 10 successives ou au canal qui relie le circuit de commande 4 avec la première station de contrôle 10.

Le séquenceur 11 comprend en outre une porte de Müller C, appelée également porte « rendez-vous ». La sortie d'une porte de Müller recopie ses entrées lorsque celles-ci sont identiques. Lorsque les entrées diffèrent, la sortie reste dans son état logique précédent.

La porte C reçoit en entrée le signal d'acquittement 7R du canal droit (entrée 2) et le signal de requête 6L du canal gauche (entrée 4). Sa sortie est connectée à une entrée d'une porte « ET » d'une part, et à une entrée d'une porte « NON-OU » d'autre part, par l'intermédiaire d'un inverseur. La porte de Müller C reçoit en outre un signal de réinitialisation, en provenance de l'entrée RST du séquenceur 11. Ce signal est capable de forcer l'état en sortie de la porte C.

Par ailleurs, le signal 6L est dupliqué vers une deuxième entrée de la porte « ET » tandis que le signal 7R est dupliqué vers une deuxième entrée de la porte « NON-OU ». Les signaux en sortie des portes « ET » et « NON-OU » forment respectivement les signaux de requête 6R du canal droit et d'acquittement 7L du canal gauche, aux sorties 1 et 3 du séquenceur 11.

Le séquenceur 11 permet alors de réaliser un fonctionnement avec le premier état et le deuxième état et de comparer les occurrences des signaux 6 et 7 tel que cela a été décrit précédemment.

Les figures 4 à 8 illustrent des étapes du fonctionnement du séquenceur 11, pris isolément. Pour faciliter la compréhension, on a représenté un signal à l'état bas (niveau logique '0') par un fil en traits pointillés et un signal à l'état haut (niveau logique '1') par un fil en trait plein.

Concernant le séquenceur 11, on a adopté la convention suivante : les signaux 6R, 7R, 7L et 6L aux entrées-sorties 1 à 4 sont actifs à l'état haut et le signal RST est actif à l'état bas. Autrement dit, le séquenceur 11 est dans sa phase d'initialisation tant que le signal RST est à '0'.

Le signal RST est un signal d'initialisation qui peut être utilisé lors du démarrage du bloc de protection et éventuellement lors du démarrage du circuit intégré. Après initialisation, tous les signaux sont inactifs. Les signaux 6R, 7R, 7L et 6L sont à '0' tandis que le signal RST est à '1'. Le signal en sortie de la porte C est à '0'. Cet état initial est représenté sur la figure 4. La figure 4 représente le premier état de la station de contrôle 10.

Lors d'une première étape illustrée à la figure 5, le signal de requête 6L du canal gauche passe à l'état haut ('1'), ce qui provoque le basculement de la porte « ET ». Le signal de requête 6R du canal droit, en sortie de la porte « ET », passe alors à '1'. La porte C ne bascule pas car ses entrées 6L et 7R diffèrent (LR = '1' et 7R = '0').

Le premier signal 6 arrive par exemple jusqu'au récepteur 5 qui émet un signal d'acquittement 7.

A l'étape suivante (Fig. 6), le signal d'acquittement 7R du canal droit passe à '1' en réponse à la précédente requête 6R. Cela a pour conséquence le basculement de la porte C puisque ses entrées 6L et 7R sont désormais toutes à '1'. Le signal en sortie de la porte C passe de '0' à '1', puis est inversé en entrée de la porte « ET ». La requête droite 6R retourne alors à l'état bas ('0'), invalide.

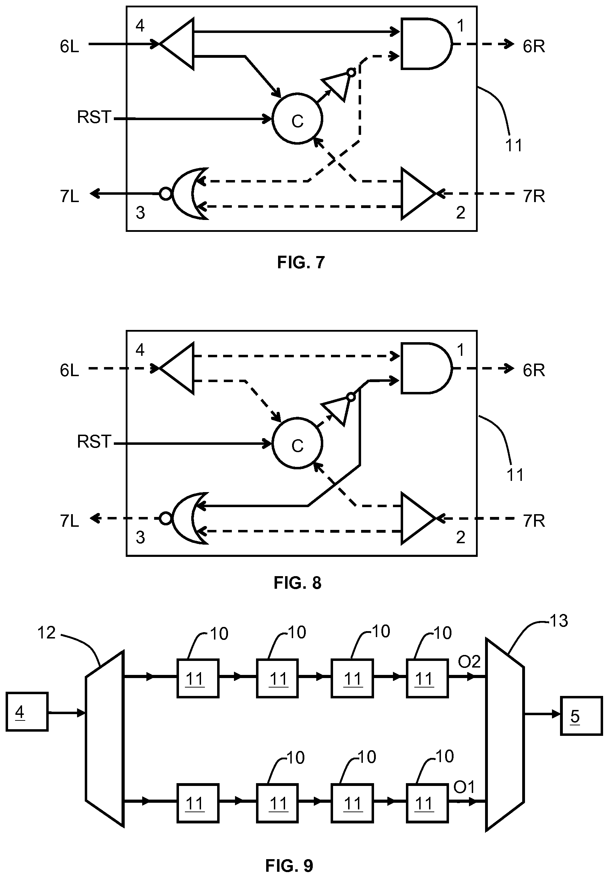

En figure 7, l'acquittement droit 7R est désactivé, il repasse à '0'. La porte C ne bascule pas, car ses entrées diffèrent. Cela provoque par contre le basculement de la porte « NON-OU », dont les entrées sont toutes les deux à '0'. Le signal d'acquittement 7L est alors activé (7L = '1'). Le deuxième signal 7 est émis pour la station de contrôle à suivre en direction du circuit de commande 4. La figure 7 représente le deuxième état de la station de contrôle 10.

Enfin, lors d'une dernière étape (Fig. 8), la requête gauche 6L est invalidée (6L = '0') suite au précèdent acquittement 7L qui a changé l'état de la station de contrôle suivante. La porte C bascule à nouveau. Le signal en sortie de la porte C change d'état, de '1' à '0', et ce changement est répercuté en entrée de la porte « NON-OU » après inversion. Il en résulte que l'acquittement gauche 7L est désactivé, c'est-à-dire mis à '0'. Le séquenceur 11 revient dans son état initial (Fig.4), le premier état de la station de contrôle, avant de commencer un nouveau cycle, c'est-à-dire en attente d'un nouveau premier signal 6.

La séquence se résume ainsi : 6R = '1' ⇒ 6R = '1' ⇒ 7R = '1' => 6R = '0' ⇒ 7R = '0' ⇒ 7L = '1' ⇒ 6L = '0' ⇒ 7L = '0'

Le protocole à quatre phases est d'abord initié sur le canal gauche S2 du séquenceur 11, par le signal 6L. Puis, les quatre phases s'enchainent sur le canal droit S1, par les signaux 6R et 7R qui passent successivement de '0' à '1' et de '1' à '0'. Enfin, les trois dernières phases du protocole sur le canal S2 sont accomplies.

Dans un mode de réalisation privilégié, la pluralité de stations de contrôle 10 est formée par une pluralité de séquenceurs 11 ayant une première entrée et une première sortie connectées à deux lignes électriquement conductrices de la première série 8 de lignes électriquement conductrices et une deuxième entrée et une deuxième sortie connectées à deux lignes électriquement conductrices de la deuxième série 9 de lignes électriquement conductrices.

Dans une telle configuration, le deuxième signal 7 émis par le récepteur 5 arrive sur la dernière station de contrôle. Le protocole à quatre phase est appliqué et la dernière station de contrôle bascule du deuxième état au premier état.

Le deuxième signal est ensuite émis de la dernière station de contrôle jusqu'à l'avant-dernière station de contrôle 10. Le protocole à quatre phase est appliqué et la dernière station de contrôle bascule du deuxième état au premier état.

Le basculement des stations de contrôle 10 se fait de proche en proche. Il apparait que cette solution est particulièrement robuste car en cas de court-circuit de plusieurs lignes électriquement conductrices de la première série, des stations de contrôle vont se bloquer et empêcher la transmission du deuxième signal. En effet, en cas de court-circuit, des stations de contrôle 10 placées à des endroits différents dans le schéma électrique vont recevoir les mêmes premiers signaux. Il sera lors impossible d'assurer les basculements successifs des séquenceurs car le protocole à quatre phase ne peut être réalisé.

Dans un mode de réalisation particulier, toutes les stations de contrôle 10 sont connectées en série comme cela est représenté sur la figure 3.

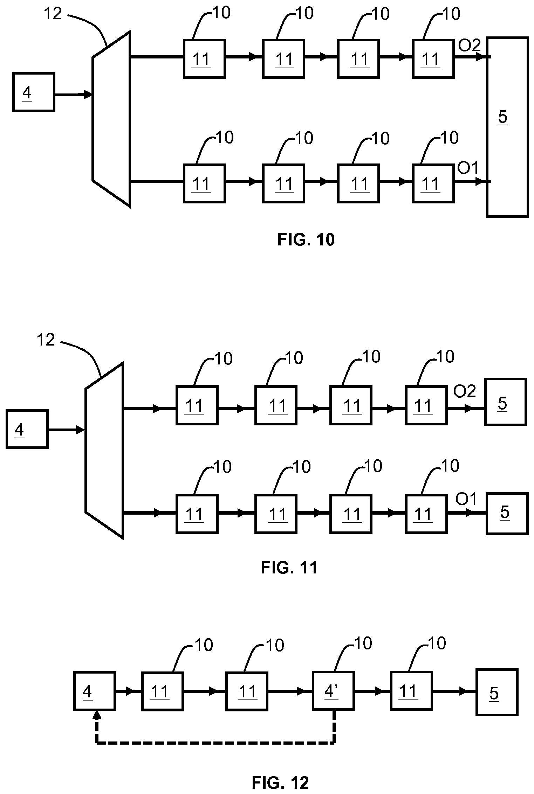

En alternative, il est possible de prévoir que toutes les stations de contrôle 10 sont connectées en parallèle comme cela est représenté de manière schématique sur les figures 9 et 10.

Dans une autre alternative de réalisation, le schéma électrique est quelconque avec des canaux de communication montés en série et/ou des canaux de communication montés en parallèle ou dérivation.

Dans un mode de réalisation avantageux, la première série 8 de lignes électriquement conductrices comporte un opérateur de divergence 12 configuré pour dupliquer le premier signal 6 reçu et alimenté au moins des première et deuxième lignes conductrices montées en dérivation. L'opérateur de divergence 12 distribue le canal d'entrée A en plusieurs canaux intermédiaires. Sur l'exemple de la figure 9, deux canaux intermédiaires O1 et O2 sont représentés.

L'opérateur de divergence 12 peut être un composant qui duplique le canal d'entrée A en au moins deux canaux intermédiaires O1 et O2 de taille identique. Par exemple, si le canal d'entrée A est composé de n+1 fils ou rails (n fils pour la requête et 1 fil pour l'acquittement), les canaux O1 et O2 sont également constitués de n+1 fils.

Alternativement, l'opérateur de divergence 12 peut être configuré pour diviser le signal de requête à n fils du canal d'entrée A en n signaux intermédiaires à 1 fil (n ≥ 2). Chacun des signaux intermédiaires ainsi obtenus forme la requête d'un canal intermédiaire O1, O2.

Dans un mode de réalisation particulier illustré à la figure 9, les canaux intermédiaires peuvent se rejoindre avant d'atteindre le récepteur 5. Il est alors avantageux d'utiliser un opérateur de convergence 13 qui connecte les canaux intermédiaires O1 et O2 au canal de sortie reliant le récepteur.

En alternative, les canaux intermédiaires O1, O2 peuvent atteindre des entrées séparées du récepteur 5 comme cela est illustré à la figure 10.

Chaque canal intermédiaire possède avantageusement au moins une station de contrôle 10 et chaque canal intermédiaire dispose en outre d'un fil d'acquittement.

Un opérateur divergence 12 lié à la première série 8 de lignes électriquement conductrices est associé à un opérateur convergence lié à la deuxième série 9 de lignes électriquement conductrices. De la même manière, un opérateur convergence 13 lié à la première série 8 de lignes électriquement conductrices est associé à un opérateur divergence lié à la deuxième série 9 de lignes électriquement conductrices. De cette manière, les premier et deuxième signaux suivent des chemins équivalents en sens inverses. En alternative un opérateur convergence pour un premier signal forme un opérateur divergence pour un deuxième signal et un opérateur divergence pour un premier signal forme un opérateur convergence pour un deuxième signal.

Lorsque le schéma électrique possède deux canaux intermédiaires montés en dérivation, les deux canaux intermédiaires peuvent être reliés à un même récepteur 5 qui peut analyser les signaux. Par exemple, le récepteur 5 peut être configuré pour émettre un deuxième signal 7 lorsque les premiers signaux 6 des deux canaux intermédiaires sont arrivés au récepteur. Il est également possible de conditionner l'émission du deuxième signal à un ordre précis d'arriver des signaux et/ou à un décalage temporel minimal ou maximal entre les deux signaux provenant des canaux en dérivation. Un tel mode de réalisation est illustré à la figure 10.

En alternative, chaque canal intermédiaire peut être connecté à un récepteur 5 spécifique. Chaque canal intermédiaire fait transiter ses premier et deuxième signaux indépendamment de l'autre canal intermédiaire. En cas d'incident sur l'un des canaux intermédiaires, un des deuxièmes signaux n'arrivera pas jusqu'à l'opérateur convergence lié aux deuxième signaux 7. Dans un cas de figure, l'opérateur convergence 13 comporte un opérateur rendez-vous qui va empêcher la transmission du deuxième signal tant que les deux signaux ne sont pas arrivés en provenance des deux canaux intermédiaires. En alternative, l'opérateur convergence comporte un additionneur qui somme les deux deuxièmes signaux. Un signal va arriver au circuit de commande mais ce dernier va détecter que le deuxième signal est incomplet ou erroné. Un tel mode de réalisation est illustré à la figure 11. Ce qui est expliqué pour le premier signal 6 peut également être appliqué pour le deuxième signal 7 et inversement.

Dans encore un autre mode de réalisation illustré à la figure 12, le circuit de commande 4 émet un premier signal qui va transiter par plusieurs stations de contrôle 10 de la première série 8 jusqu'à un récepteur/émetteur 4'. Lorsque le récepteur/émetteur 4' reçoit le premier signal en provenance du circuit de commande 4 ce dernier émet un nouveau premier signal dans la première série 8 en direction du récepteur 5.

Lorsque le premier signal 6 arrive au récepteur 5 ce dernier émet un deuxième signal 7 qui se déplace en sens inverse à travers la deuxième série 9. Le deuxième signal arrive jusqu'au récepteur/émetteur 4' qui va également émettre un deuxième signal en direction du circuit de commande 4.

Le récepteur/émetteur 4' est connecté au circuit de commande 4 et il prévient le circuit de commande 4 lorsqu'il reçoit le premier signal et/ou le deuxième signal ou lorsqu'il ne reçoit pas le premier signal et/ou le deuxième signal après une durée prédéfinie.

Ce mode de réalisation est avantageux car il permet de placer des points de contrôle temporel à l'intérieur du bouclier. Ces points de contrôle temporel permettent de détecter plus tôt une intrusion car il n'est plus nécessaire d'attendre l'écoulement d'une durée représentative du transit complet le long du premier schéma électrique.

Dans une alternative de réalisation, lorsque le récepteur/émetteur 4' reçoit le premier signal en provenance du circuit de commande 4 ce dernier émet un nouveau premier signal dans la première série 8 en direction du récepteur 5 et il émet un deuxième signal en direction du circuit de commande. Dans cette configuration, le deuxième signal circule entre le circuit de commande 4 et le récepteur/émetteur 4' de manière simultanée au premier signal qui circule entre le récepteur/émetteur 4' et le récepteur 5. Cette configuration permet de découper le bouclier en des blocs séparés qui sont utilisés séquentiellement sur une partie du bouclier puis simultanément sur une autre partie du bouclier. Il est alors possible de détecter plus rapidement une attaque et de la localiser plus finement.

Dans un mode de réalisation particulier, le récepteur/émetteur 4' est par exemple une station de contrôle 10 qui est connectée au circuit de commande 4. La station de contrôle 10 envoie une information relative à son basculement dans le deuxième état et/ou dans le premier état. Le circuit de commande 4 est alors en mesure de suivre la propagation des signaux dans le premier schéma électrique.

De manière avantageuse, le circuit de commande 4 est configuré pour détecter une modification du schéma électrique par défaut de réception du deuxième signal 7 ou signal d'acquittement après une première durée prédéterminée. Dès que le circuit de commande 4 détecte que la première durée est atteinte, le circuit de commande 4 peut demander ou imposer un changement du fonctionnement du bloc fonctionnel 1 en réponse à cette détection. Dans un mode de réalisation préférentiel, la première durée est décomptée à partir de l'émission du premier signal 6 par le circuit de commande 4.

Dans un mode de réalisation particulier, le signal de requête peut être associé aux données qui transitent entre les deux stations de contrôle 10. Dans ce cas, la requête et les données forment un même premier signal 6, de plusieurs bits, chaque bit étant codé sur au moins deux fils (codage « double rail » par exemple). Autrement dit, le premier signal 6 de requête n'est pas nécessairement véhiculé par un seul fil.

Si deux boucliers sont alimentés par un même circuit de commande, il est avantageux de connecter un comparateur de séquence à un élément de chacun des canaux intermédiaires. Le comparateur de séquence est configuré pour comparer l'état des deux éléments. Le comparateur délivre un signal représentatif de cette comparaison. Le résultat de cette comparaison peut être envoyé au circuit de commande 4. Le dispositif de protection 2 peut modifier le fonctionnement du bloc fonctionnel 1 en fonction du résultat de la comparaison. Cette configuration est particulièrement avantageuse afin de détecter quel canal intermédiaire est fautif.

## Revendications

1. Circuit intégré comportant :
- un bloc fonctionnel (1) configuré pour réaliser une pluralité de fonctions logiques et/ou analogiques,
- un dispositif de protection (2) comportant :
∘ un circuit de commande (4) configuré pour émettre au moins un premier signal (6) et recevoir un deuxième signal (7)
∘ un récepteur (5) configuré pour recevoir le premier signal (6) et émettre le deuxième signal (7) en réception du premier signal (6),
∘ une première série (8) de lignes électriquement conductrices reliant le circuit de commande (4) et le récepteur (5) pour assurer le transit du premier signal (6),
∘ une deuxième série (9) de lignes électriquement conductrices reliant le récepteur (5) et le circuit de commande (4) pour assurer le transit du deuxième signal (7),
∘ une pluralité de stations de contrôle (10) connectées simultanément à la première et à la deuxième séries (8, 9) de lignes électriquement conductrices pour définir un premier schéma électrique élémentaire dans la première série (8) de lignes électriquement conductrices et un deuxième schéma électrique élémentaire distinct et équivalent au premier schéma électrique élémentaire dans la deuxième série (9) de lignes électriquement conductrices,
∘ un bouclier (3) disposé pour recouvrir au moins partiellement le bloc fonctionnel (1), le bouclier (3) comportant une partie de l'ensemble formé par la première et la deuxième séries de lignes électriquement conductrices,
circuit intégré dans lequel le circuit de commande (4) est configuré pour détecter une modification du premier schéma électrique élémentaire par rapport au deuxième schéma électrique élémentaire par défaut de réception du deuxième signal après une durée prédéterminée.

2. Circuit intégré selon la revendication 1, **caractérisé en ce que** chaque station de contrôle (10) est configurée pour mesurer la différence d'occurrence entre le premier signal (6) et le deuxième signal (7) et bloquer la propagation d'au moins un des premier et deuxième signaux (6, 7) en fonction de ladite mesure.

3. Circuit intégré selon l'une des revendications 1 et 2, **caractérisé en ce que** chaque station de contrôle (10) est configurée pour présenter un premier état autorisant le passage du premier signal (6) et un deuxième état bloquant le passage du premier signal (6), chaque station de contrôle (10) est configurée pour basculer du premier état au deuxième état à réception du premier signal (6) et basculer du deuxième état au premier état à réception du deuxième signal (7).

4. Circuit intégré selon la revendication 3, **caractérisé en ce que** chaque station de contrôle (10) est configurée pour présenter un deuxième état autorisant le passage du deuxième signal (7) et un premier état bloquant le passage du deuxième signal (7).

5. Circuit intégré selon l'une quelconque des revendications précédentes, **caractérisé en ce que** chaque station de contrôle (10) est formée par un séquenceur (11) ayant une première entrée et une première sortie connectées à deux lignes électriquement conductrices de la première série (8) de lignes électriquement conductrices et une deuxième entrée et une deuxième sortie connectées à deux lignes électriquement conductrices de la deuxième série (9) de lignes électriquement conductrices.

6. Circuit intégré selon la revendication précédente, **caractérisé en ce que** le séquenceur est un séquenceur asynchrone.

7. Circuit intégré selon l'une quelconque des revendications précédentes, **caractérisé en ce que** la première et la deuxième séries (8, 9) de lignes électriquement conductrices sont disposées au-dessus du bloc fonctionnel (1) et **en ce que** la deuxième série (9) de lignes électriquement conductrices est disposée entre la première série (8) de lignes électriquement conductrices formant le bouclier (3) et le bloc fonctionnel (1).

8. Circuit intégré selon l'une quelconque des revendications 1 à 6, **caractérisé en ce que** la première et la deuxième séries (8, 9) de lignes électriquement conductrices sont disposées au-dessus du bloc fonctionnel (1) et **en ce que** la première série (8) de lignes électriquement conductrices est disposée entre la deuxième série (9) de lignes électriquement conductrices formant le bouclier (3) et le bloc fonctionnel (1).

9. Circuit intégré selon l'une quelconque des revendications 1 à 6, **caractérisé en ce que** la première et la deuxième séries (8, 9) de lignes électriquement conductrices sont disposées au-dessus du bloc fonctionnel (1), **en ce qu'**une première partie de la première série (8) et une première partie de la deuxième série (9) de lignes électriquement conductrices forment le bouclier (3) et **en ce qu'**une deuxième partie de la première série (8) et une deuxième partie de la deuxième série (9) de lignes électriquement conductrices sont disposées entre le bouclier (3) et le bloc fonctionnel (1).

10. Circuit intégré selon l'une quelconque des revendications 5 à 9, **caractérisé en ce que** la première série (8) de lignes électriquement conductrices comporte un circuit de divergence (12) configuré pour dupliquer le premier signal (6) reçu et alimenter au moins des première et deuxième lignes montées en dérivation, la première et la deuxième lignes montées en dérivation comportant respectivement un premier et un deuxième séquenceurs (11).

11. Circuit intégré selon l'une quelconque des revendications précédentes, **caractérisé en ce que** le circuit de commande (4) est configuré pour demander un changement du fonctionnement du bloc fonctionnel (1) en réponse à la détection de la modification du premier schéma électrique élémentaire par rapport au deuxième schéma électrique élémentaire.

12. Procédé de protection d'un circuit intégré comportant les étapes successives suivantes :
- fournir un circuit intégré comportant :
∘ un bloc fonctionnel (1) configuré pour réaliser une pluralité de fonctions logiques et/ou analogiques,
∘ un premier schéma électrique élémentaire défini par une première série (8) de lignes électriquement conductrices,
∘ un deuxième schéma électrique élémentaire distinct et équivalent au premier schéma électrique élémentaire, le deuxième schéma électrique élémentaire étant défini par une deuxième série (9) de lignes électriquement conductrices,
∘ une pluralité de stations de contrôle (10) connectées simultanément à la première et à la deuxième séries (8, 9) de lignes électriquement conductrices,
∘ un bouclier (3) disposé pour recouvrir au moins partiellement le bloc fonctionnel (1), le bouclier (3) comportant une partie de l'ensemble formé par la première et la deuxième séries de lignes électriquement conductrices,
- émettre un premier signal (6) sur la première série (8) de lignes électriquement conductrices à partir du circuit de commande (4) en direction d'un récepteur (5),
- contrôler si après une première durée prédéterminée, un deuxième signal (7) est reçu par le circuit de commande (4) à partir de la deuxième série (9) de lignes électriquement conductrices.

13. Procédé selon la revendication précédente, **caractérisé en ce que** le circuit de commande (4) déclenche une stratégie de réponse modifiant le fonctionnement du bloc fonctionnel (1) si après la première durée prédéterminée, le circuit de commande (4) n'a pas reçu le deuxième signal (7).

## Patentansprüche

1. Integrierte Schaltung, die umfasst:
- einen Funktionsblock (1), der so konfiguriert ist, dass er eine Mehrzahl logischer und/oder analoger Funktionen ausführen kann,
- eine Schutzvorrichtung (2), die umfasst:
∘ eine Steuerschaltung (4), die so konfiguriert ist, dass sie mindestens ein erstes Signal (6) sendet und ein zweites Signal (7) empfängt,
∘ einen Empfänger (5), der so konfiguriert ist, dass er das erste Signal (6) empfangen und das zweite Signal (7) beim Empfang des ersten Signals (6) senden kann,
∘ eine erste Reihe (8) elektrisch leitender Leitungen, die die Steuerschaltung (4) und den Empfänger (5) miteinander verbinden, um die Durchleitung des ersten Signals (6) sicherzustellen,
∘ eine zweite Reihe (9) elektrisch leitender Leitungen, die den Empfänger (5) und die Steuerschaltung (4) miteinander verbinden, um die Durchleitung des zweiten Signals (6) sicherzustellen,
∘ eine Mehrzahl von Kontrollstationen (10), die gleichzeitig mit der ersten und zweiten Reihe (8, 9) elektrisch leitender Leitungen verbunden sind, um ein erstes Grundelektroschema in der ersten Reihe (8) elektrisch leitender Leitungen und ein zweites, verschiedenes Grundelektroschema zu definieren, das dem ersten Grundelektroschema in der zweiten Reihe (9) elektrisch leitender Leitungen vergleichbar ist,
∘ eine Abschirmung (3), die so angeordnet ist, dass sie den Funktionsblock (1) zumindest teilweise überdeckt, wobei die Abschirmung (3) einen Teil der von der ersten und zweiten Reihe elektrisch leitender Leitungen gebildeten Anordnung umfasst,
eine integrierte Schaltung, in der die Steuerschaltung (4) so konfiguriert ist, dass sie eine Veränderung des ersten Grundelektroschema bezüglich dem zweiten Grundelektroschema durch fehlenden Empfang des zweiten Signals nach einer vorbestimmten Zeit feststellt.

2. Integrierte Schaltung nach Anspruch 1, **dadurch gekennzeichnet, dass** jede Steuerstation (10) so konfiguriert ist, dass sie den Unterschied des Auftretens zwischen dem ersten Signal (6) und dem zweiten Signal (7) misst und die Ausbreitung mindestens eines des ersten und zweiten Signals (6, 7) in Abhängigkeit von dieser Messung blockiert.

3. Integrierte Schaltung nach einem der Ansprüche 1 und 2, **dadurch gekennzeichnet, dass** jede Kontrollstation (10) so konfiguriert ist, dass sie einen ersten Zustand hat, der den Durchgang des ersten Signals (6) erlaubt, und einen zweiten Zustand, der den Durchgang des ersten Signals (6) blockiert, wobei jede Steuerstation (10) so konfiguriert ist, dass sie beim Empfang des ersten Signals (6) vom ersten Zustand in den zweiten Zustand umschaltet und beim Empfang des zweiten Signals (7) vom zweiten Zustand in den ersten Zustand umschaltet.

4. Integrierte Schaltung nach Anspruch 3, **dadurch gekennzeichnet, dass** jede Kontrollstation (10) so konfiguriert ist, dass sie einen zweiten Zustand hat, der den Durchgang des zweiten Signals (7) erlaubt, und einen ersten Zustand, der den Durchgang des zweiten Signals (7) blockiert.

5. Integrierte Schaltung nach einem der vorstehenden Ansprüche, **dadurch gekennzeichnet, dass** jede Kontrollstation (10) von einem Sequenzer (11) gebildet wird, der einen ersten Eingang und einen ersten Ausgang aufweist, die an zwei elektrisch leitende Leitungen der ersten Reihe (8) elektrisch leitender Leitungen gelegt sind, sowie einen zweiten Eingang und einen zweiten Ausgang, die an zwei elektrisch leitende Leitungen der zweiten Reihe (9) elektrisch leitender Leitungen gelegt sind.

6. Integrierte Schaltung nach dem vorstehenden Anspruch, **dadurch gekennzeichnet, dass** der Sequenzer ein asynchroner Sequenzer ist.

7. Integrierte Schaltung nach einem der vorstehenden Ansprüche, **dadurch gekennzeichnet, dass** die erste und zweite Reihe (8, 9) elektrisch leitender Leitungen oberhalb des Funktionsblocks (1) angeordnet sind und dass die zweite Reihe (9) elektrisch leitender Leitungen zwischen der ersten Reihe (8) elektrisch leitender Leitungen, die die Abschirmung (3) bilden, und dem Funktionsblock (1) angeordnet ist.

8. Integrierte Schaltung nach einem der Ansprüche 1 bis 6, **dadurch gekennzeichnet, dass** die erste und zweite Reihe (8, 9) elektrisch leitender Leitungen oberhalb des Funktionsblocks (1) angeordnet sind, und dass die erste Reihe (8) elektrisch leitender Leitungen zwischen der zweiten Reihe (9) elektrisch leitender Leitungen, die die Abschirmung (3) bilden, und dem Funktionsblock (1) angeordnet ist.

9. Integrierte Schaltung nach einem der Ansprüche 1 bis 6, **dadurch gekennzeichnet, dass** die erste und zweite Reihe (8, 9) elektrisch leitender Leitungen oberhalb des Funktionsblocks (1) angeordnet sind, dass ein erster Teil der ersten Reihe (8) und ein erster Teil der zweiten Reihe (9) elektrisch leitender Leitungen die Abschirmung (3) bilden und dass ein zweiter Teil der ersten Reihe (8) und ein zweiter Teil der zweiten Reihe (9) elektrisch leitender Leitungen zwischen der Abschirmung (3) und dem Funktionsblock (1) angeordnet sind.

10. Integrierte Schaltung nach einem der Ansprüche 5 bis 9, **dadurch gekennzeichnet, dass** die erste Reihe (8) elektrisch leitender Leitungen eine Divergenzschaltung (12) umfasst, die so konfiguriert, dass sie das erste empfangene Signal (6) dupliziert und mindestens eine erste und zweite Nebenschlussleitung speist, wobei erste und zweite Nebenschlussleitung jeweils einen ersten bzw. zweiten Sequenzer (11) aufweisen.

11. Integrierte Schaltung nach einem der vorstehenden Ansprüche, **dadurch gekennzeichnet, dass** die Steuerschaltung (4) so konfiguriert ist, dass sie eine Funktionsänderung des Funktionsblocks (1) als Antwort auf das Erkennen der Veränderung des ersten Grundelektroschemas bezogen auf das zweite Grundelektroschema verlangt.

12. Verfahren zum Schutz einer integrierten Schaltung, das folgende aufeinanderfolgende Schritte umfasst:
- Bereitstellung einer integrierten Schaltung, die umfasst:
∘ einen Funktionsblock (1), der so konfiguriert ist, dass er eine Mehrzahl logischer und/oder analoger Funktionen ausführen kann,
∘ ein erstes Grundelektroschema, das von einer ersten Reihe (8) elektrisch leitender Leitungen gebildet wird,
∘ ein zweites, vom ersten Grundelektroschema verschiedenes, vergleichbares Grundelektroschema, wobei das zweite Grundelektroschema von einer zweiten Reihe (9) elektrisch leitender Leitungen gebildet wird,
∘ eine Mehrzahl Kontrollstationen (10), die sowohl mit der ersten als auch der zweiten Reihe (8, 9) elektrisch leitender Leitungen verbunden sind,
∘ eine Abschirmung (3), die so angeordnet ist, dass sie den Funktionsblock (1) zumindest teilweise überdeckt, wobei die Abschirmung (3) einen Teil der von der ersten und zweiten Reihe elektrisch leitender Leitungen gebildeten Anordnung umfasst,
- Senden eines ersten Signals (6) über die erste Reihe (8) elektrisch leitender Leitungen von der Steuerschaltung (4) aus zu einem Empfänger (5),
- Prüfen, ob die Steuerschaltung (4) nach einer ersten vorbestimmten Zeit ein zweites Signal (7) von der zweiten Reihe (9) elektrisch leitender Leitungen aus empfängt.

13. Verfahren nach dem vorstehenden Anspruch, **dadurch gekennzeichnet, dass** die Steuerschaltung (4) eine Antwortstrategie auslöst, die eine Funktionsänderung des Funktionsblocks (1) bewirkt, wenn die Steuerschaltung (4) das zweite Signal (7) nach der ersten vorbestimmten Zeit nicht empfangen hat.

## Claims

1. Integrated circuit comprising:
- a functional block (1) configured to perform a plurality of logic and/or analog functions,
- a protection device (2) comprising:
∘ a control circuit (4) configured to transmit at least a first signal (6) and to receive a second signal (7),
∘ a receiver (5) configured to receive the first signal (6) and to transmit the second signal (7) on receipt of the first signal (6),
∘ a first series (8) of electrically conducting lines connecting the control circuit (4) and the receiver (5) to perform transit of the first signal (6),
∘ a second series (9) of electrically conducting lines connecting the receiver (5) and the control circuit (4) to perform transit of the second signal (7),
∘ a plurality of monitoring stations (10) simultaneously connected to the first and second series (8, 9) of electrically conducting lines to define a first elementary electric system in the first series (8) of electrically conducting lines and a distinct second elementary electric system equivalent to the first elementary electric system in the second series (9) of electrically conducting lines,
∘ a shield (3) arranged to at least partially cover the functional block (1), the shield (3) comprising a part of the assembly formed by the first and second series of electrically conducting lines,
integrated circuit wherein the control circuit (4) is configured to detect a modification of the first elementary electric system with respect to the second elementary electric system in the absence of receipt of the second signal after a predefined time-out.

2. Integrated circuit according to claim 1, **characterized in that** each monitoring station (10) is configured to measure the difference of occurrence between the first signal (6) and the second signal (7) and to disable propagation of at least one of the first and second signals (6, 7) according to said measurement.

3. Integrated circuit according to one of claims 1 and 2, **characterized in that** each monitoring station (10) is configured to present a first state enabling passage of the first signal (6) and a second state disabling passage of the first signal (6), each monitoring station (10) being configured to switch from first state to second state on receipt of the first signal (6) and to switch from second state to first state on receipt of the second signal (7).

4. Integrated circuit according to claim 3, **characterized in that** each monitoring station (10) is configured to present a second state enabling passage of the second signal (7) and a first state disabling passage of the second signal (7).

5. Device according to any one of the foregoing claims, **characterized in that** each monitoring station (10) is formed by a sequencer (11) having a first input and a first output connected to two electrically conducting lines of the first series (8) of electrically conducting lines and a second input and a second output connected to two electrically conducting lines of the second series (9) of electrically conducting lines.

6. Device according to the foregoing claim, **characterized in that** the sequencer is an asynchronous sequencer.

7. Integrated circuit according to any one of the foregoing claims, **characterized in that** the first and second series (8, 9) of electrically conducting lines are arranged above the functional block (1) and **in that** the second series (9) of electrically conducting lines is arranged between the first series (8) of electrically conducting lines forming the shield (3) and the functional block (1).

8. Integrated circuit according to any one of claims 1 to 6, **characterized in that** the first and second series (8, 9) of electrically conducting lines are arranged above the functional block (1) and **in that** the first series (8) of electrically conducting lines is located between the second series (9) of electrically conducting lines forming the shield (3) and the functional block (1).

9. Integrated circuit according to any one of claims 1 to 6, **characterized in that** the first and second series (8, 9) of electrically conducting lines are arranged above the functional block (1), **in that** a first part of the first series (8) and a first part of the second series (9) of electrically conducting lines form the shield (3), and **in that** a second part of the first series (8) and a second part of the second series (9) of electrically conducting lines are arranged between the shield (3) and the functional block (1).

10. Device according to any one of claims 5 to 9, **characterized in that** the first series (8) of electrically conducting lines comprises a divergence circuit (12) configured to duplicate the first signal (6) received and to supply at least first and second branch-connected lines, the first and second branch-connected lines respectively comprising a first and second sequencer (11).

11. Device according to any one of the foregoing claims, **characterized in that** the control circuit (4) is configured to request a change of operation of the functional block (1) in response to detection of modification of the first elementary electric system with respect to the second elementary electric system.

12. Protection method of an integrated circuit comprising the following successive steps:
- providing an integrated circuit comprising:
∘ a functional block (1) configured to perform a plurality of logic and/or analog functions,
∘ a first elementary electric system defined by a first series (8) of electrically conducting lines,
∘ a distinct second elementary electric system equivalent to the first elementary electric system, the second elementary electric system being defined by a second series (9) of electrically conducting lines,
∘ a plurality of monitoring stations (10) simultaneously connected to the first and second series (8, 9) of electrically conducting lines,
∘ a shield (3) arranged to at least partially cover the functional block (1), the shield (3) comprising a part of the assembly formed by the first and second series of electrically conducting lines,
- transmitting a first signal (6) on the first series (8) of electrically conducting lines from the control circuit (4) in the direction of a receiver (5),
- checking whether a second signal (7) is received by the control circuit (4) from the second series (9) of electrically conducting lines after a first predefined time-out.

13. Method according to the foregoing claim, **characterized in that** the control circuit (4) triggers a response strategy modifying the operation of the functional block (1) if the control circuit (4) has not received the second signal (7) after the first predefined time-out.
